# EUROPEAN PATENT SPECIFICATION

(11) **EP 2 102 596 B1**
(45) Date of publication and mention of the grant of the patent: **03.01.2018**
(21) Application number: 07820690.1
(22) Date of filing: 28.09.2007
(51) Int. Cl.: G01C 21/34, G01C 21/36

(54) **METHOD OF INDICATING TRAFFIC DELAYS, COMPUTER PROGRAM AND NAVIGATION SYSTEM THEREFOR**
VERFAHREN ZUR ANZEIGE VON VERKEHRSBEHINDERUNGEN, COMPUTERPROGRAMM UND NAVIGATIONSSYSTEM DAFÜR
PROCÉDÉ PERMETTANT D'INDIQUER LES RETARDS DE TRAFIC, PROGRAMME INFORMATIQUE ET SYSTÈME DE NAVIGATION AFFÉRENT

(30) Priority: 10.01.2007 US 879523 P; 10.01.2007 US 879549 P; 10.01.2007 US 879553 P; 10.01.2007 US 879577 P; 10.01.2007 US 879599 P
(43) Date of publication of application: 23.09.2009
(73) Proprietor: TomTom Navigation B.V., 1011 AC Amsterdam (NL)
(72) Inventor: GEELEN, Pieter, NL-1017 CT Amsterdam (NL)
(74) Representative: Dobson, Adrian
(86) International application number: PCT/EP2007/060303
(87) International publication number: WO 2008/083862

(56) References cited:
- EP-A- 1 087 359
- EP-A- 1 533 592
- DE-A1- 10 233 376
- DE-C1- 4 445 582
- US-A1- 2004 204 845
- US-A1- 2006 069 500
- US-B1- 6 680 674

## Description

### Field of the invention

This invention relates to a method of indicating traffic delays in a navigation system for planning a route of a vehicle, the method comprising receiving traffic information comprising position information of each one of a number of delay incidents, determining a position of the vehicle on a planned route and communicating information concerning the delay incidents to a user.

This invention further relates to a computer program product and a navigation system for performing the method of indicating traffic delays.

### Background of the invention

Nowadays, many motorists use in-car navigation systems for planning routes. Using digital maps and location information of the user, e.g. based on GPS signals received by a GPS receiver, navigation systems calculate the shortest, fastest or otherwise optimal route to a destination. One of the problems with routes planned by navigation systems is that traffic jams, road work and other delay incidents may drastically increase the time needed for reaching the destination. Some navigation systems, e.g. provided by TomTom (www.tomtom.com), are able to receive traffic information concerning the planned route and adapt the planned route in such a way that large delays are avoided. E.g., icons indicating delay incidents are shown on a map. A user may use the user interface of the navigation system to obtain further information about the delay incidents, such as the positions of the beginning or end of the delay incident, an expected delay time caused by the delay incident or a cause of the delay incident. Adaptations to the planned route may be applied automatically, after approval by the user or upon a specific user request.

It is a problem of the known traffic information services that icons on a map are only visible when the location of the corresponding delay incident is on-screen. Typically, this is only the case when the user approaches the delay incident. Relevant delay incidents that are further away may be invisible for the user. When the icon becomes visible, it may be too late to change the route and avoid the delay.

US-A1-2004/204845 describes a display method and an apparatus for a navigation system evaluating the traffic information and displaying the traffic incidents in the order of importance for a user travelling to the destination. The navigation system applies various criteria to the traffic incidents and the route to the destination and determines an order of displaying the traffic incidents in accordance with the degrees of severity along the calculated route to the destination. Instead of assigning the listing order, colours can be assigned to the traffic incident icons based on the degrees of severity.

DE-A1-102 33 376, EP-A-1 533 592, DE-C1-44 45 582 and US-B1-6 680 674 disclose similar display methods for traffic information.

### Object of the invention

It is an object of the invention to provide a more intuitive and user-friendly way of informing the user about delays to be expected.

### Summary of the invention

According to a first aspect of the invention, this object is achieved by providing a method of indicating traffic delays in a navigation system for planning a route of a vehicle, the method comprising receiving traffic information comprising position information of each one of a number of delay incidents, determining a position of the vehicle on a planned route, determining a relevance of each one of the delay incidents on the planned route, based on the position information of the respective delay incident and on the position of the vehicle, selecting at least one delay incident on the planned route, based on the determined relevance of the respective delay incident, and communicating information concerning the selected delay incident to a user.

By communicating only the most relevant delay incident(s) to the user, it becomes much easier to communicate the obtained information to the user in such a way that it is easily understandable for the user, without interfering too much with the providing of the usual route information. For example, the selected delay incident(s) may be read out loud by a text-to-speech converter or may be displayed as text, graphics or a combination of both on a relatively small sub-section of the display. The inventors have realized that the relevance of the delay incidents is mainly dependent on the position information of the incidents. A traffic jam situated 100 km from a current position is less relevant than another traffic jam that is only 10 km away.

In an embodiment of the method according to the invention, the traffic information further comprises an expected delay caused by each one of the number of delay incidents and the determining of the relevance of each one of the delay incidents on the planned route is further based on the expected delay caused by the respective delay incident. A one hour delay starting at 20 kilometers from the current position may be much more relevant than a 2 minutes delay that is only 2 kilometers away.

Preferably, the traffic information, the position of the vehicle and the relevance of each one of the number of delay incidents are updated periodically. After each update, new relevant delay incidents and changes to previously communicated delay incidents are communicated to the user. Furthermore, the system may remove information concerning delay incidents with a decreased relevance from the display screen.

In an embodiment of the method according to the invention, the method further comprises determining a total expected delay of all delay incidents on the planned route together and communicating the total expected delay to the user. An indication of the total amount of delay to be expected gives the user a good estimate of the duration of the delay incidents that are not selected for communication and the expected time of arrival at the destination.

Preferably, the communicating of the total expected delay comprises providing an audible warning message when the delay situation significantly changes. Traffic information may be updated very often or even almost continuously. The user should however keep an eye on the road and should not have to look at the screen of the navigation all the time to check whether something has changed in the traffic situation. If the user receives an audible message each time an interesting change or update of the traffic situation is observed, continuously watching the display is not required.

According to a second aspect of the invention, a computer program product is provided which program is operative to cause a processor to perform the method according to the invention.
According to a third aspect of the invention, a navigator system is provided for planning a route of a vehicle, the system comprising a receiver for receiving traffic information comprising position information of each one of a number of delay incidents, a memory for storing the received traffic information, a processor. The processor is arranged for determining a position of the vehicle on a planned route, determining a relevance of each one of the delay incidents on the planned route, based on the position information of the respective delay incident and on the position of the vehicle, and selecting at least one delay incident on the planned route, based on the determined relevance of the respective delay incident. The system further comprises an output for communicating information concerning the selected delay incident to a user.

These and other aspects of the invention are apparent from and will be elucidated with reference to the embodiments described hereinafter.

### Brief description of the drawings

In the drawings:
Figure 1 shows a navigation device according to the invention,
Figure 2 schematically shows components of the navigation device of figure 1,
Figure 3 shows a flow diagram of the method according to the invention,
Figure 4 shows an exemplary view of a display of the navigation device,
Figures 5, 6 and 7 show examples of traffic bars for indicating traffic delays.

### Detailed description of the invention

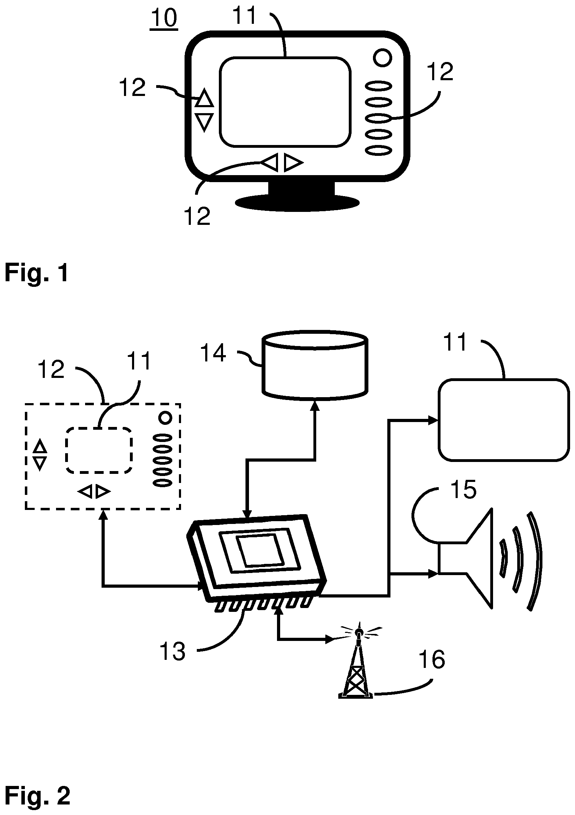

Figure 1 shows a navigation device 10 according to the invention. The navigation device 10 comprises a display 11 for showing, e.g., route information and traffic information. The navigation device 10 further comprises a set of interface elements 12 for enabling the user to interact with the navigation device 10. Preferably, the display 11 is a touch-screen display and the user interface of the navigation device 10 is, at least in part, embodied by menus shown and operated on the touch-screen. The navigation device 10 may use voice recognition for receiving control commands from the user. Preferably, the navigation device uses text-to-speech conversion to inform the user about, the planned route, traffic information or other information via audible messages.

Figure 2 schematically shows components of the navigation device 10 of figure 1. The navigation device comprises a processor 13 for controlling the functioning of the navigation device 10. The processor 13 is arranged to process input data from, e.g., the user, GPS satellites and traffic delay information services to calculate an optimal route for the user to travel to a destination. The processor 13 is coupled to the user interface 11, 12 for receiving instructions from the user and coupled to the display 11 for showing, e.g., planned routes, traffic information and user interface options. The processor 13 is also coupled to a memory 14 for storing software and data. The software is used by the processor to perform all functions of the navigation device 10. The data comprises, e.g., destinations, map data, user information, graphics and sound data. A speaker 15 is coupled to the processor 13 for providing audible messages. The navigation device 10 may comprise several communication units 16, all coupled to the processor 13. Generally, a navigation device 10 comprises a GPS sensor for determining a current position of the navigation device 10. Other suitable techniques may be used as an alternative or additionally, e.g., using information derived from cell based wireless communication systems, such as GSM, UMTS, GPRS, WiFi or WiMAX. Traffic information may, be obtained from a traffic information source via, e.g., AM or FM radio communication, dedicated satellite systems, mobile telephone communication networks (e.g. GSM, UMTS, GPRS) or via a nearby telephone or computer via local communication means, such as Bluetooth or USB. With the components described above, the navigation device 10 is suitable for performing the method according to the invention. It is however to be noted, that amendments or additions may be made without decreasing the suitability for performing the method according to the invention.

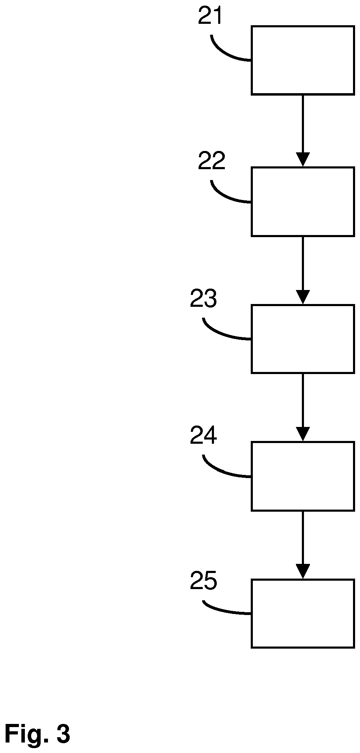

Figure 3, shows a flow diagram of the method according to the invention. The method according to the invention may be performed while the vehicle is traversing a planned route. The method starts wit a receiving step 21 for receiving traffic information. The traffic information comprises position information of a number of delay incidents, the traffic information may also comprise additional information about the delay incidents, such as delay type (e.g., road block, accident, road work, slow moving traffic, rush hour), expected delay, trend (e.g. growing or shrinking) or other additional information, such as a moment of last update of the information. Generally, the navigation device 10 will receive all traffic information available for a large area, e.g. for the whole country or state or even for multiple nearby countries or states. However, on request, the area covered by the traffic information may be reduced in dependence of the planned route or the position of the vehicle.

In a position determining step 22, the position of the vehicle on the planned route is determined. Generally, a navigation device 10 comprises a GPS sensor for determining a current position of the navigation device 10. Other suitable techniques may be used as an alternative or additionally, e.g., using information derived from cell based wireless communication systems, such as GSM, UMTS, GPRS, WiFi or WiMAX.

Then in relevance determining step 23, the relevance of each one of the delay incidents on the planned route. All traffic information received in the receiving step 21 is filtered in order to select the delay incidents that are on the planned routes. For all delay incidents on the planned route, a relevance value is calculated. Amongst others, the relevance value is based on the current vehicle position and position information of the delay incident. If, e.g., the delay incident is only a few kilometers away from the current vehicle position, the incident is very relevant and will obtain a high relevance value. If the delay incident is 200 kilometers away, it may already have been disappeared once the vehicle reaches the position of the delay incident. Such an incident thus is much less relevant and will get a lower relevance value. The relevance value may further based on an expected delay caused by the delay incident. A one hour delay is more relevant than a 3 minutes delay. Preferably, the relevance value is based on a combination of its position and its associated expected delay. For example, a 3 minutes delay that is a few kilometers away may be more relevant than a 10 minutes delay in about 200 kilometers, and a one hour delay that is 20 kilometers away may be more important than a 3 minutes delay around the next corner.

Examples of other criteria that may influence the relevance value are delay type (e.g., road block, accident, road work, slow moving traffic, rush hour), expected delay, trend (e.g. growing or shrinking) or other additional information, such as a moment of last update of the information. Preferably, all criteria work together. For example, a one hour delay caused by a rush hour traffic jam that is 300 km away, may not be very relevant. However, a tunnel that has been closed for a few days and is 500 km away is a relevant delay incident.

After determining the relevance values of all delay incidents on the route, one or more delay incidents are selected for communicating to the user in selection step 24. Only the selected incidents are communicated to the user in communication step 25. When only informing the user about the most relevant delay incidents, the user will not be annoyed by less relevant information. Communicating delay incidents may be performed by showing graphics or text on the display 11 and/or by providing the information as spoken text via a speaker 15. When only displaying the most relevant incidents, a larger part of the display remains available for displaying maps, route information and other information.

In an embodiment of the method according to the invention, selection of delay incidents depends on a combination of the distance to and delay caused by the delay incident. The most relevant delay incidents are nearby and cause a long delay. The least relevant delay incidents are far away and cause a short delay. For each possible incident distance, there is may be minimum delay that makes the incident relevant. On the other hand, for each possible delay, there may be a maximum distance making the delay incident relevant. A selection algorithm may, e.g., select delay incidents for communicating to the user in the following manner:
If there is only one incident on the route, it is never hidden (an incident is hidden when its relevance value is below a predetermined limit).

If the distance to an incident is shorter than 15km it is never hidden.
Delay 0-30 sec. => incident is hidden if distance > 7km
Delay 31-90 sec. => incident is hidden if distance > 15km
Delay 1-2 min. => incident is hidden if distance > 30km
Delay 2-3 min. => incident is hidden if distance > 45km
Delay 3-4 min. => incident is hidden if distance > 60km
Delay 4-5 min. => incident is hidden if distance > 75km
Delay 5-10 min. => incident is hidden if distance > 150km
Delay 10-15 min. => incident is hidden if distance > 200km
Delay 15-20 min. => incident is hidden if distance > 250km
Delay 20-30 min. => incident is hidden if distance > 300km
Delay > 30 min. => incident is never hidden

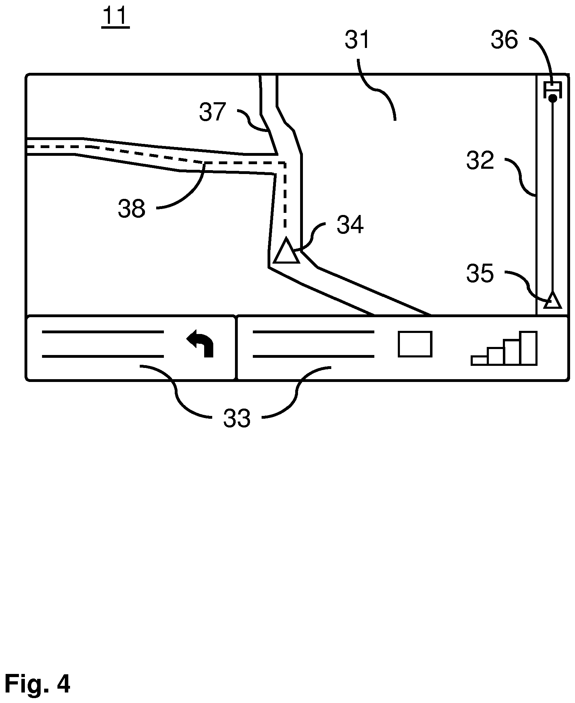

Figure 4 shows an exemplary view of a display 11 of the navigation device 10. The display 11 shows a map 31 with one or more roads 37. An indicator 34 represents the current position of the vehicle on the map 11. Part of the roads 37 on the map 11 are highlighted for indicating the route 38 that is advised to the user. An information panel 33 may provide the route information in another form, e.g. using text and arrows. The information panel 33 may also show additional information, such as e.g. battery power and display options. In this embodiment, a traffic bar 32 is used for indicating traffic information. A skilled person will be able to use other ways of displaying traffic information on screen. The traffic bar 32 comprises a vehicle icon 35, representing the current position of the vehicle. Preferably the same icon is used as for the indicator 34 on the map 31, making it easier for the user to understand the vehicle icon 35. When a new route is planned and the vehicle has not yet started traveling, the vehicle icon may be replaced by a Go flag that represents the start location of the route. A finish icon 36 represents the destination. The same icon may be used for representing the destination on the map 31. A line extending from the vehicle icon 35, to the finish icon 36 represents the planned route. Representations of the delay incidents on the route are placed on the line. In the situation of figure 3 however, no delay incidents are reported. In the following figures, traffic bars 32 are shown, comprising one or more delay incidents. It is to be noted that when no delay incident is expected, the traffic bar 32 may be hidden completely.

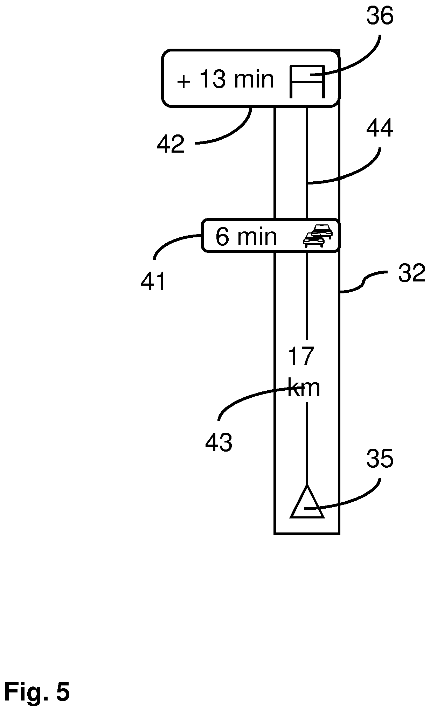

Figures, 5, 6 and 7 show examples of traffic bars 32 for indicating traffic delays. In figure 5, only the most relevant delay incident 41 is shown. The shown delay incident is traffic jam, causing a 6 minutes delay and starting 17 km from the current position of the vehicle. A distance indicator 43, indicates the distance from the vehicle to the first relevant delay incident 41. The position of the selected delay incident 41 on the traffic bar 32 is proportional to the distance from the vehicle and the destination. The route indicator 44 represents the distance between the vehicle and the destination. When a delay incident is, e.g., half way between the vehicle and the destination, the delay incident 41 is shown halfway the route indicator 44. As the vehicle approaches the delay incident, the route represented by the route indicator 44 becomes shorter and the delay incidents slides down towards the vehicle icon. When the vehicle has passed the selected delay incident 41, the next most relevant delay incident may be shown. In this example, the scale of the route indicator is linear, however other options are also available. The scale may, e.g., also be logarithmic. As an option, the scale of the traffic bar 32 may be indicated by numbers displayed along the traffic bar and indicating the distance from the vehicle.

Optionally, the length of the traffic bar may be limited to only represent the area for which traffic information is available and parts of the route for which traffic information is not available may not be shown. In the event that the traffic information is not up to date anymore, e.g., because of connection problems, the traffic bar may be 'greyed out', i.e. shown in a different color.

A total expected delay indicator 42 at the top of the traffic bar 32 indicates the total delay to be expected. The fact that the total expected delay indicator 42 is put next to the finish icon 36, will make it more obvious to the user that it deals with a total delay, since they are likely to put a connection between the end of the route and the total delay they encountered along this route. This will increase usability. An advantage of the plus sign shown in the total expected delay icon 42 is put in front of the number to indicate that this number indicates the total delay, and not a delay of one of the incidents on the route. It is to be noted that the total expected delay icon 42 may, of course, also be embodied in alternative ways. The total delay is the sum of the expected delays of all delay incidents on the route. In figure 5, the total delay is 13 minutes. The only incident 41 selected for display causes a 6 minutes delay. Other delay incidents that are further away and/or cause less delay are not selected for display. The delay incidents that are not shown together cause a delay of 7 minutes

The traffic information is updated periodically, which may cause the displayed information to be changed. Preferably, a warning message is provided if the total expected delay is changed more than a predetermined amount of time. For example, an increase of the total expected delay to 14 minutes will not cause a warning message, but when the total expected delay becomes more than 18 minutes, a warning message is provided. Preferably, the warning message is provided as an audible signal, making it unnecessary for the user to repeatedly check the display. The user may then keep his eyes on the road which improves safety. Most preferably, the warning message is provided using text-to-speech conversion and comprises the updated total expected delay. This message may also contain a question for the user, if he wishes to optimize the route. If the device supports voice recognition, the user may answer the question without needing to let go the steering wheel.

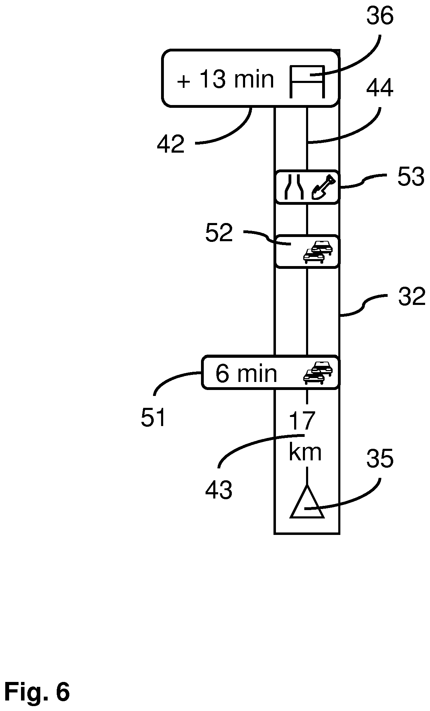

In figure 6, not only the most relevant, but also some other relevant delay incidents are shown. The first relevant delay incident 51 is similar to the most relevant delay incident 41 in figure 5. Again, the incident distance indicator 43 shows the distance between the vehicle and the first relevant incident 51. Two other relevant delay incident 52, 53 are also selected for display on the traffic bar 32. The second relevant delay incident 52 is also a traffic jam. The third delay incident 53 is a road narrowing because of road work. In this example, the specific delays expected for these further incidents 52, 53 is not shown, because it is determined to be less relevant. However, in an alternative embodiment, the expected delays for these incidents may also be shown.

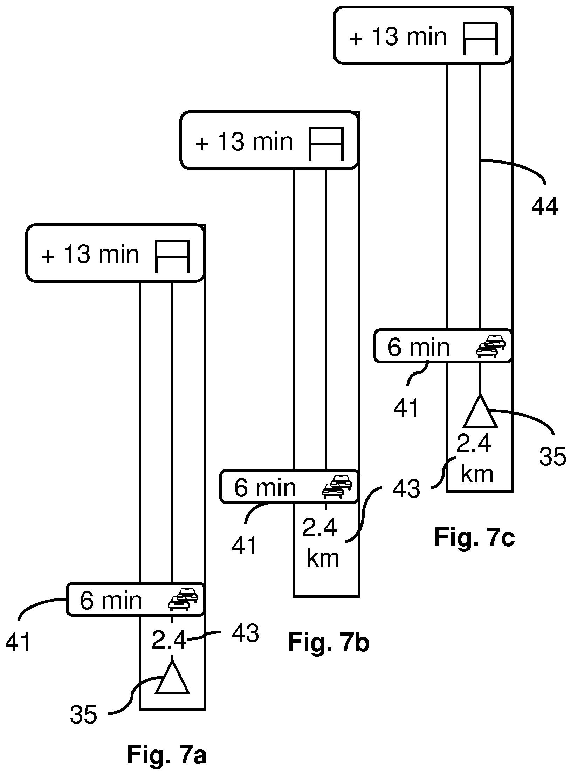

Figures 7a, 7b and 7c show three different ways to solve the problem that the distance indicator 43, may be too large to fit between the first relevant delay incident 41 and the vehicle icon 35. In figure 7a this problem is solved by making the distance indicator 43 smaller. In Figure 7b, the distance indicator 43 slides over the vehicle icon 35 and the vehicle icon 35 is not visible anymore. In figure 7c, the route indicator 44 has been made smaller and the distance indicator 43 is displayed below the vehicle icon 35.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Further the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A method of indicating traffic delays in a navigation system (10) as a vehicle traverses a planned route, the method comprising:
receiving (21) traffic information comprising position information indicating the position of each one of a number of delay incidents;
filtering said received traffic information to select delay incidents that are on a planned route to a destination;
determining (22) a position of the vehicle on the planned route;
determining (23) a relevance value for each one of the selected delay incidents on the planned route, based on a distance to the position of the respective delay incident from the position of the vehicle;
selecting (24) at least one relevant delay incident on the planned route, based on the determined relevance values; and
communicating (25) information concerning the selected at least one relevant delay incident to a user, wherein the communicating comprises providing, for display on a display device (11) of the navigation system, a traffic bar (32) comprising a vehicle icon (35) at one end representing the position of the vehicle on the planned route, a finish icon (36) at the other end representing the destination, and a line extending from the vehicle icon to the finish icon representing the planned route, said traffic bar further comprising a representation (41 ;51,52,53) of the position of each of the one or more selected relevant delay incidents at distances from the vehicle icon and the finish icon corresponding to the distance from the position of the vehicle to the delay incident and the distance from the delay incident and the destination respectively.

2. A method of indicating traffic delays as claimed in claim 1, wherein the traffic information further comprises an expected delay caused by each one of the number of delay incidents, and wherein the determining of the relevance value for each one of the selected delay incidents on the planned route is further based on the expected delay caused by the respective delay incident.

3. A method of indicating traffic delays as claimed in claim 1 or 2, wherein the traffic information further comprises a delay type of each one of the number of delay incidents, and wherein the determining of the relevance value for each one of the selected delay incidents on the planned route is further based on the delay type of the respective delay incident.

4. A method of indicating traffic delays as claimed in claim 2, wherein the selecting at least one relevant delay incident on the planned route comprises selecting delay incidents where the distance between the position of the vehicle and the position of the respective delay incident is below a predetermined distance limit and the expected delay of the respective delay incident is above a predetermined delay limit.

5. A method of indicating traffic delays as claimed in claim 4, wherein the predetermined delay limit is dependent on the distance between the position of the vehicle and the position of the respective delay incident.

6. A method of indicating traffic delays as claimed in any preceding claim, wherein the traffic bar (32) further comprises a representation (41;51) of the expected delay caused by the one or more selected relevant delay incidents.

7. A method of indicating traffic delays as claimed in any preceding claim, further comprising determining a total expected delay (36) of all the selected delay incidents on the planned route and communicating the total expected delay to the user.

8. A method of indicating traffic delays as claimed in claim 7, further comprising periodically updating the traffic information and the total expected delay and communicating the updated total expected delay, and providing an audible warning message if a predetermined criterion is met.

9. A method of indicating traffic delays as claimed in claim 8, wherein the predetermined criterion is met when, since a previous warning message, the updating of the total expected delay has resulted in an increase of the total expected delay with more than a first predetermined amount of time.

10. A method of indicating traffic delays as claimed in claim 8, wherein the predetermined criterion is met when the previous warning message has been provided more than a second predetermined amount of time ago.

11. A method of indicating traffic delays as claimed in any of claims 8 to 10, wherein the audible warning message is generated using text to speech conversion.

12. A method of indicating traffic delays as claimed in any preceding claim, wherein the communicating comprises providing the traffic bar (32) for display along an edge of the display device (11) of the navigation system (10).

13. A computer program product for indicating traffic delays which program is operative to cause a processor to perform the method as claimed in any of the claims 1 to 12, optionally stored on a computer readable medium.

14. A navigation system (10) for indicating traffic delays as a vehicle traverses a planned route, the system comprising:
a receiver (16) for receiving traffic information comprising position information indicating the position of each one of a number of delay incidents;
a memory (14) for storing the received traffic information;
a processor (13) being arranged to:
filter said received traffic information to select delay incidents that are on a planned route to the destination;
determine a position of the vehicle on a planned route,
determine a relevance value for each one of the selected delay incidents on the planned route, based on a distance to the position of the respective delay incident from the position of the vehicle;
selecting at least one relevant delay incident on the planned route, based on the determined relevance values; and
a display device (11) for communicating information concerning the selected at least one relevant delay incident to a user,
wherein the processor (13) is further arranged to:
output a traffic bar (32) for display on the display device (11), said traffic bar comprising a vehicle icon (35) at one end representing the position of the vehicle on the planned route, a finish icon (36) at the other end representing the destination, and a line extending from the vehicle icon to the finish icon representing the planned route, said traffic bar further comprising a representation (41 ;51,52,53) of the position of each of the one or more selected relevant delay incidents at distances from the vehicle icon and the finish icon corresponding to the distance from the position of the vehicle to the delay incident and the distance from the delay incident and the destination respectively.

## Patentansprüche

1. Verfahren zum Anzeigen von Verkehrsverzögerungen in einem Navigationssystem (10), während ein Fahrzeug über eine geplante Route fährt, wobei das Verfahren Folgendes beinhaltet:
Empfangen (21) von Verkehrsinformationen, die Positionsinformationen umfassen, die die Position jedes aus einer Anzahl von Verzögerungsereignissen anzeigen,
Filtern der genannten empfangenen Verkehrsinformationen zum Auswählen von Verzögerungsereignissen, die sich auf einer geplanten Route zu einem Ziel befinden;
Feststellen (22) einer Position des Fahrzeugs auf der geplanten Route;
Feststellen (23) eines Relevanzwertes für jedes der gewählten Verzögerungsereignisse auf der geplanten Route auf der Basis einer Distanz zwischen der Position des jeweiligen Verzögerungsereignisses und der Position des Fahrzeugs;
Auswählen (24) von wenigstens einem relevanten Verzögerungsereignis auf der geplanten Route auf der Basis der bestimmten Relevanzwerte; und
Übermitteln (25) von Informationen über das gewählte wenigstens eine relevante Verzögerungsereignis zu einem Benutzer, wobei das Kommunizieren das Bereitstellen, zur Anzeige auf einem Anzeigegerät (11) des Navigationssystems, eines Verkehrsbalkens (32) beinhaltet, der an einem Ende ein Fahrzeug-Icon (35), das die Position des Fahrzeugs auf der geplanten Route darstellt, am anderen Ende ein Endpunkt-Icon (36), das das Ziel darstellt, und eine Linie umfasst, die vom Fahrzeug-Icon zum Endpunkt-Icon verläuft und die geplante Route darstellt, wobei der genannte Verkehrsbalken ferner eine Darstellung (41, 51, 52, 53) der Position jedes der ein oder mehreren gewählten relevanten Verzögerungsereignisse in Distanzen von dem Fahrzeug-Icon und dem Endpunkt-Icon umfasst, entsprechend der Distanz zwischen der Position des Fahrzeugs und dem Verzögerungsereignis und der Distanz von dem Verzögerungsereignis bzw. dem Ziel.

2. Verfahren zum Anzeigen von Verkehrsverzögerungen nach Anspruch 1, wobei die Verkehrsinformationen ferner eine erwartete Verzögerung beinhalten, verursacht durch jedes aus der Anzahl von Verzögerungsereignissen, und wobei das Feststellen des Relevanzwertes für jedes der gewählten Verzögerungsereignisse auf der geplanten Route ferner auf der durch das jeweilige Verzögerungsereignis verursachten erwarteten Verzögerung basiert.

3. Verfahren zum Anzeigen von Verkehrsverzögerungen nach Anspruch 1 oder 2, wobei die Verkehrsinformationen ferner einen Verzögerungstyp jedes aus der Anzahl von Verzögerungsereignissen umfasst und wobei das Feststellen des Relevanzwertes für jedes der gewählten Verzögerungsereignisse auf der geplanten Route ferner auf dem Verzögerungstyp des jeweiligen Verzögerungsereignisses basiert.

4. Verfahren zum Anzeigen von Verkehrsverzögerungen nach Anspruch 2, wobei das Auswählen von wenigstens einem relevanten Verzögerungsereignis auf der geplanten Route das Auswählen von Verzögerungsereignissen umfasst, wobei die Distanz zwischen der Position des Fahrzeugs und der Position des jeweiligen Verzögerungsereignisses unter einer vorbestimmten Distanzgrenze liegt und die erwartete Verzögerung des jeweiligen Verzögerungsereignisses über einer vorbestimmten Verzögerungsgrenze liegt.

5. Verfahren zum Anzeigen von Verkehrsverzögerungen nach Anspruch 4, wobei die vorbestimmte Verzögerungsgrenze von der Distanz zwischen der Position des Fahrzeugs und der Position des jeweiligen Verzögerungsereignisses abhängig ist.

6. Verfahren zum Anzeigen von Verkehrsverzögerungen nach einem vorherigen Anspruch, wobei der Verkehrsbalken (32) ferner eine Darstellung (41; 51) der durch die ein oder mehreren gewählten relevanten Verzögerungsereignisse verursachten erwarteten Verzögerung umfasst.

7. Verfahren zum Anzeigen von Verkehrsverzögerungen nach einem vorherigen Anspruch, das ferner das Feststellen einer gesamten erwarteten Verzögerung (36) aller gewählten Verzögerungsereignisse auf der geplanten Route und das Kommunizieren der gesamten erwarteten Verzögerung an den Benutzer beinhaltet.

8. Verfahren zum Anzeigen von Verkehrsverzögerungen nach Anspruch 7, das ferner das periodische Aktualisieren der Verkehrsinformationen und der gesamten erwarteten Verzögerung und das Kommunizieren der aktualisierten gesamten erwarteten Verzögerung und das Bereitstellen einer hörbaren Warnmeldung beinhaltet, wenn ein vorbestimmtes Kriterium erfüllt ist.

9. Verfahren zum Anzeigen von Verkehrsverzögerungen nach Anspruch 8, wobei das vorbestimmte Kriterium erfüllt ist, wenn seit einer vorherigen Warnmeldung das Aktualisieren der gesamten erwarteten Verzögerung zu einer Verlängerung der gesamten erwarteten Verzögerung um mehr als einen ersten vorbestimmten Zeitbetrag resultiert hat.

10. Verfahren zum Anzeigen von Verkehrsverzögerungen nach Anspruch 8, wobei das vorbestimmte Kriterium erfüllt ist, wenn die vorherige Warnmeldung vor mehr als einem vorbestimmten Zeitbetrag erfolgt ist.

11. Verfahren zum Anzeigen von Verkehrsverzögerungen nach einem der Ansprüche 8 bis 10, wobei die hörbare Warnmeldung mit Text-in-Sprache-Umwandlung erzeugt wird.

12. Verfahren zum Anzeigen von Verkehrsverzögerungen nach einem vorherigen Anspruch, wobei das Kommunizieren das Bereitstellen des Verkehrsbalkens (32) zur Anzeige entlang einem Rand des Anzeigegeräts (11) des Navigationssystems (10) beinhaltet.

13. Computerprogrammprodukt zum Anzeigen von Verkehrsverzögerungen, wobei das Programm die Aufgabe hat zu bewirken, dass ein Prozessor das Verfahren nach einem der Ansprüche 1 bis 12 ausführt, optional auf einem computerlesbaren Medium gespeichert.

14. Navigationssystem (10) zum Anzeigen von Verkehrsverzögerungen, während ein Fahrzeug über eine geplante Route fährt, wobei das System Folgendes umfasst:
einen Empfänger (16) zum Empfangen von Verkehrsinformationen, die Positionsinformationen umfassen, die die Position von jedem aus einer Anzahl von Verzögerungsereignissen anzeigen;
einen Speicher (14) zum Speichern der empfangenen Verkehrsinformationen;
einen Prozessor (13), ausgelegt zum:
Filtern der genannten empfangenen Verkehrsinformationen zum Auswählen von Verzögerungsereignissen, die sich auf einer geplanten Route zu dem Ziel befinden;
Feststellen einer Position des Fahrzeugs auf einer geplanten Route,
Feststellen eines Relevanzwertes für jedes der gewählten Verzögerungsereignisse auf der geplanten Route auf der Basis einer Distanz zu der Position des jeweiligen Verzögerungsereignisses von der Position des Fahrzeugs;
Auswählen von wenigstens einem relevanten Verzögerungsereignis auf der geplanten Route auf der Basis der bestimmten Relevanzwerte; und
ein Anzeigegerät (11) zum Kommunizieren von Informationen über das wenigstens eine relevante Verzögerungsereignis an einen Benutzer,
wobei der Prozessor (13) ferner ausgelegt ist zum:
Ausgeben eines Verkehrsbalkens (32) zur Anzeige auf dem Anzeigegerät (11), wobei der genannte Verkehrsbalken an einem Ende ein Verkehrs-Icon (35), das die Position des Fahrzeugs auf der geplanten Route darstellt, am anderen Ende ein Endpunkt-Icon (36), das das Ziel darstellt, und eine Linie umfasst, die vom Verkehrs-Icon zum Endpunkt-Icon verläuft und die geplante Route darstellt, wobei der genannte Verkehrsbalken ferner eine Darstellung (41; 51, 52, 53) der Position jedes der ein oder mehreren gewählten relevanten Verzögerungsereignisse in Distanzen von dem Verkehrs-Icon und dem Endpunkt-Icon entsprechend der Distanz zwischen der Position des Fahrzeugs und dem Verzögerungsereignis und der Distanz vom Verzögerungsereignis bzw. dem Ziel umfasst.

## Revendications

1. Procédé permettant d'indiquer des retards de trafic dans un système de navigation (10) au fur et à mesure qu'un véhicule traverse un itinéraire planifié, le procédé comprenant les opérations consistant à :
recevoir (21) des informations de trafic comprenant des informations de position qui indiquent la position de chacun d'un certain nombre d'incidents de retard ;
filtrer lesdites informations de trafic reçues pour sélectionner des incidents de retard qui se trouvent sur un itinéraire planifié jusqu'à une destination ;
déterminer (22) une position du véhicule sur l'itinéraire planifié ;
déterminer (23) une valeur de pertinence pour chacun des incidents de retard sélectionnés sur l'itinéraire planifié, sur la base d'une distance jusqu'à la position de l'incident de retard respectif à partir de la position du véhicule ;
sélectionner (24) au moins un incident de retard pertinent sur l'itinéraire planifié, sur la base des valeurs de pertinence déterminées ; et
communiquer (25) à un utilisateur des informations concernant ledit au moins un incident de retard pertinent sélectionné, cas dans lequel l'opération de communication comprend la fourniture, à des fins d'affichage sur un dispositif afficheur (11) du système de navigation, d'une barre de trafic (32) comprenant une icône de véhicule (35) au niveau d'une extrémité qui représente la position du véhicule sur l'itinéraire planifié, une icône de fin (36) au niveau de l'autre extrémité qui représente la destination, et une ligne qui s'étend à partir de l'icône de véhicule jusqu'à l'icône de fin qui représente l'itinéraire planifié, ladite barre de trafic comprenant en outre une représentation (41 ; 51, 52, 53) de la position de chacun desdits un ou plusieurs incidents de retard pertinents sélectionnés à des distances à partir de l'icône de véhicule et l'icône de fin correspondant à la distance à partir de la position du véhicule jusqu'à l'incident de retard et la distance à partir de l'incident de retard et de la destination respectivement.

2. Procédé permettant d'indiquer des retards de trafic selon la revendication 1, les informations de trafic comprenant en outre un retard escompté causé par chacun du nombre d'incidents de retard, et l'opération consistant à déterminer la valeur de pertinence pour chacun des incidents de retard sélectionnés sur l'itinéraire planifié étant basée en outre sur le retard escompté causé par l'incident de retard respectif.

3. Procédé permettant d'indiquer des retards de trafic selon la revendication 1 ou 2, les informations de trafic comprenant en outre un type de retard de chacun du nombre d'incidents de retard, et l'opération consistant à déterminer la valeur de pertinence pour chacun des incidents de retard sélectionnés sur l'itinéraire planifié étant basée en outre sur le type de retard de l'incident de retard respectif.

4. Procédé permettant d'indiquer des retards de trafic selon la revendication 2, l'opération consistant à sélectionner au moins un incident de retard pertinent sur l'itinéraire planifié comprenant la sélection d'incidents de retard où la distance entre la position du véhicule et la position de l'incident de retard respectif se situe en dessous d'une limite de distance prédéterminée et le retard escompté de l'incident de retard respectif se situe au-dessus d'une limite de retard prédéterminée.

5. Procédé permettant d'indiquer des retards de trafic selon la revendication 4, la limite de retard prédéterminée étant dépendante de la distance entre la position du véhicule et la position de l'incident de retard respectif.

6. Procédé permettant d'indiquer des retards de trafic selon une quelconque revendication précédente, la barre de trafic (32) comprenant en outre une représentation (41 ; 51) du retard escompté causé par lesdits un ou plusieurs incidents de retard pertinents sélectionnés.

7. Procédé permettant d'indiquer des retards de trafic selon une quelconque revendication précédente, comprenant en outre les opérations consistant à déterminer un retard total escompté (36) de tous les incidents de retard sélectionnés sur l'itinéraire planifié, et à communiquer à l'utilisateur le retard total escompté.

8. Procédé permettant d'indiquer des retards de trafic selon la revendication 7, comprenant en outre les opérations consistant à mettre périodiquement à jour les informations de trafic et le retard total escompté, et à communiquer le retard total escompté mis à jour, et à fournir un message d'avertissement audible si un critère prédéterminé est satisfait.

9. Procédé permettant d'indiquer des retards de trafic selon la revendication 8, le critère prédéterminé étant satisfait lorsque, depuis un message d'avertissement antérieur, la mise à jour du retard total escompté a abouti à un accroissement du retard total escompté de plus d'une première quantité de temps prédéterminée.

10. Procédé permettant d'indiquer des retards de trafic selon la revendication 8, le critère prédéterminé étant satisfait lorsque le message d'avertissement antérieur a été fourni il y a plus d'une deuxième quantité de temps prédéterminée.

11. Procédé permettant d'indiquer des retards de trafic selon l'une quelconque des revendications 8 à 10, le message d'avertissement audible étant généré grâce à l'utilisation d'une conversion texte à parole.

12. Procédé permettant d'indiquer des retards de trafic selon une quelconque revendication précédente, l'opération de communication comprenant la fourniture de la barre de trafic (32) à des fins d'affichage le long d'un bord du dispositif afficheur (11) du système de navigation (10).

13. Produit de programme informatique pour indiquer des retards de trafic, ce programme fonctionnant de façon à obliger un processeur à réaliser le procédé selon l'une quelconque des revendications 1 à 12, facultativement stocké sur un support lisible par ordinateur.

14. Système de navigation (10) pour indiquer des retards de trafic au fur et à mesure qu'un véhicule traverse un itinéraire planifié, le système comprenant :
un récepteur (16) pour recevoir des informations de trafic comprenant des informations de position qui indiquent la position de chacun d'un certain nombre d'incidents de retard ;
une mémoire (14) pour stocker les informations de trafic reçues ;
un processeur (13) étant agencé de façon à :
filtrer lesdites informations de trafic reçues pour sélectionner des incidents de retard qui se trouvent sur un itinéraire planifié jusqu'à la destination ;
déterminer une position du véhicule sur un itinéraire planifié,
déterminer une valeur de pertinence pour chacun des incidents de retard sélectionnés sur l'itinéraire planifié, sur la base d'une distance jusqu'à la position de l'incident de retard respectif à partir de la position du véhicule ;
sélectionner au moins un incident de retard pertinent sur l'itinéraire planifié, sur la base des valeurs de pertinence déterminées ; et
un dispositif afficheur (11) pour communiquer à un utilisateur des informations concernant ledit au moins un incident de retard pertinent sélectionné,
cas dans lequel le processeur (13) est agencé en outre de façon à :
délivrer en sortie une barre de trafic (32) à des fins d'affichage sur le dispositif afficheur (11), ladite barre de trafic comprenant une icône de véhicule (35) au niveau d'une extrémité qui représente la position du véhicule sur l'itinéraire planifié, une icône de fin (36) au niveau de l'autre extrémité qui représente la destination, et une ligne qui s'étend à partir de l'icône de véhicule jusqu'à l'icône de fin qui représente l'itinéraire planifié, ladite barre de trafic comprenant en outre une représentation (41 ; 51, 52, 53) de la position de chacun desdits un ou plusieurs incidents de retard pertinents sélectionnés à des distances à partir de l'icône de véhicule et l'icône de fin correspondant à la distance à partir de la position du véhicule jusqu'à l'incident de retard et la distance à partir de l'incident de retard et de la destination respectivement.
